# EUROPÄISCHE PATENTSCHRIFT

(11) **EP 1 513 645 B1**
(45) Veröffentlichungstag und Bekanntmachung des Hinweises auf die Patenterteilung: **05.07.2006**
(21) Anmeldenummer: 03725014.9
(22) Anmeldetag: 11.04.2003
(51) Int. Cl.: B23D 51/02, B23D 61/12

(54) **HANDSTICHS GEMASCHINE**
HAND-HELD COMPASS SAW
SCIE M CANIQUE PILOTAGE MANUEL

(30) Priorität: 03.06.2002 DE 20208553 U
(43) Veröffentlichungstag der Anmeldung: 16.03.2005
(73) Patentinhaber: SCINTILLA AG, CH-4501 Solothurn (CH)
(72) Erfinder: DELFINI, Stefano, CH-2544 Bettlach (CH); KAISER, Hans, CH-3297 Leuzigen (CH); STOSS, Paul, CH-4534 Flumenthal (CH); RUEPP, Urs, CH-4500 Solothurn (CH)
(86) Internationale Anmeldenummer: PCT/EP2003/003802
(87) Internationale Veröffentlichungsnummer: WO 2003/101657

(56) Entgegenhaltungen:
- DE-A- 19 729 745
- GB-A- 2 300 145
- US-A- 5 644 847

## Beschreibung

### Stand der Technik

Die vorliegende Erfindung geht aus von einer Handstichsägemaschine mit den Merkmalen des Oberbegriffs des Anspruchs 1. Eine solche Vorrichtung ist aus GB-A-2 300 145 bekannt.

Aus dem GB-Patent 23 223 28 ist eine Handstichsägemaschine bekannt, deren Pendelrolle eine konische, zentrale Umfangsnut aufweist, in der sich der Sägeblattrücken eines in der Handstichsägemaschine auf und ab bewegten Sägeblatts abstützen soll.

Es sind auch Stichsägeblätter bekannt, deren Seitenflächen zum Sägeblattrücken hin spitzwinklig angeschrägt sind, sodass sie in der Pendelrolle der obengenannten Handstichsägemaschine seitlich flächig geführt sind und sich dadurch verhältnismäßig gut abstützen können.

Bei besonders schmalen Stichsägeblättern besteht jedoch die Gefahr, dass diese sich nicht mit beiden Seiten gleichzeitig in der zu breiten Nut der Pendelrolle abstützen können und dadurch die Gefahr besteht, dass der Sägeschnitt unsauber verläuft.

### Vorteile der Erfindung

Diese Aufgabe wird erfindungsgemäß im wesentlichen durch die Merkmale des Hauptanspruches gelöst.
Die vorliegende Erfindung mit den Merkmalen des Anspruchs 1 hat den Vorteil, dass mit geringem Aufwand an Mitteln die Stichsägeblätter der erfindungsgemä8en Stichsäge so ausgestaltet sind, dass sie unabhängig von der Sägeblattstärke bzw. -dicke ein gleiches, minimiertes seitliches Spiel haben. Die Sägeblätter werden nicht mehr allein am SägeblattrUcken, sondern vorwiegend an den Seitenflächen geführt. Dadurch wird die Tendenz zum Verlaufen des Sägeblatts beim Sägen eindeutig minimiert.

Dadurch, dass die Anschrägung des Rückenbereichs der Sägeblätter spanlos gefortnt, insbesondere geprägt ist, ist dieser besonders verschleißsicher.

Dadurch, dass die Leitrolle als Pendelhub-Stützrolle dient, bewirkt sie in Verbindung mit dem in besonderer Weise ausgestalteten Sägeblatt einen verbesserten Sägefortschritt bei verringerter Schnittkanalbreite, weil das Sägeblatt steifer geführt ist und keine Torsionsbewegung erfährt.

Dadurch, dass der Sägeblattrücken, gemessen an den Anschrägungs- bzw. Konuskanten, breiter als der Nutgrund der Umfangsnut ist, insbesondere nicht breiter als 1,5 mm, ist ein Anliegen des Sägeblattrückens unmittelbar im Nutgrund auszuschließen und die alleinig seitliche Abstützung des Sägeblatts gesichert.

Dadurch, dass die Nutflanken der zentralen Umfangsnut an der Leitrolle mit 5 Grad angeschrägt sind, sind die an ihrem Rücken mit 7 ° angeschrägten Sägeblätter seitlich sicher geführt.

Dadurch, dass die Leitrolle einen Durchmesser von 10 bis 25 mm hat und die Umfangsnut möglichst tief ist, ist die seitliche Führung aller bisher bekannten Stichsägeblättertypen mit 7 ° angeschrägtem Rücken sehr sicher.

Dadurch, dass der Nutgrund der Umfangsnut weniger breit ist als der Sägeblattrücken ist, insbesondere nicht breiter als 1,4 mm, kann mit der Handstichsägemaschine besonders kontrolliert, sicher und präzise gesägt werden.

### Zeichnungen

Nachstehend ist die vorliegende Erfindung anhand einer zugehörigen Zeichnung erläutert.

Es zeigen
Figur 1 eine Seitenansicht der erfindungsgemäßen Handstichsägemaschine,
Figur 2 einen vergrößerten Ausschnitt eines Längsschnitts gemäß Figur 1,
Figur 3 einen vergrößerten Ausschnitt des Querschnitts gemäß Figur 1 im Bereich der Leitrolle,
Figur 4 einen Teilquerschnitt der Leitrolle als Einzelheit,
Figur 5 eine Seitenansicht des erfindungsgemäßen Sägeblatts,
Figur 6 einen Querschnitt des erfindungsgemäßen Sägeblatts und
Figur 7 einen schematischen Querschnitt der Leitrolle mit darin geführtem Sägeblatt als Vergrößerung.

### Beschreibung des Ausführungsbeispiels

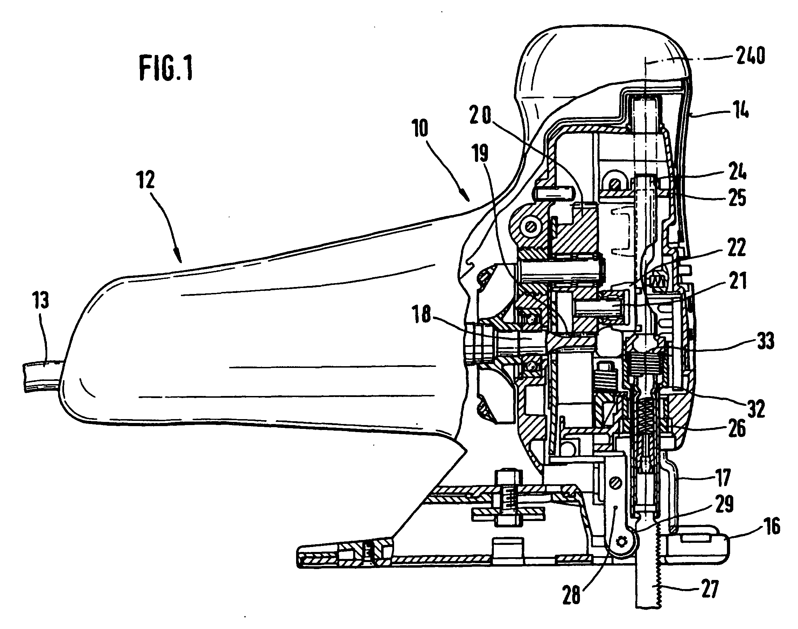

In Figur 1 ist eine Stichsäge 10 mit einem als Handgriff dienenden Motorgehäuse 12 gezeigt, das sich parallel zur Vorschubrichtung erstreckt und aus dessen hinterem Bereich ein Elektrokabel 13 austritt.

Im vorderen Bereich weist die Stichsäge 10 ein an das Motorgehäuse 12 angeflanschtes Getriebegehäuse 14 auf, das gemeinsam mit dem Motorgehäuse 12 gegenüber einer Grundplatte 16 zur Durchführung von Gehrungsschnitten winkelverstellbar angeordnet ist. Zwischen dem Getriebegehäuse 14 und der Grundplatte 16 ist starr am Getriebegehäuse 14 ein stangenartiger Berührungsschutz 17 angeordnet, der ein unbeabsichtigtes Berühren eines Sägeblatts 27 von vorne im Bereich seiner Sägezähne verhindert.

Ein nicht näher bezeichneter Motor erteilt seiner Motorwelle 18, die in einem Wellenritzel 19 endet und in das Getriebegehäuse 14 ragt, eine Drehbewegung. Mit dem Wellenritzel 19 kämmt ein Zahnrad 20, das parallelachsig zur Motorwelle 18 gelagert ist und das einen als Kurbel 21 dienenden exzentrischen Stift drehend mitnimmt, der in ein kulissenartiges Gleitstück 22 greift, das mit einer Hubstange 24 fest verbunden ist.

Die Hubstange 24 ist in einer oberen Hubstangenführung 25 und mit ihrem unteren Bereich in einer unteren Hubstangenführung 26 gleitend gerade geführt gelagert. Ein unten am Getriebegehäuse 14 angeordneter Pendelhebel 28 wird auf nicht näher erläuterte Wiese vom Zahnrad 20 pendelnd angetrieben, wobei sich seine als Pendelrolle dienende Leitrolle 29 gegen den Rücken 270 des Sägeblatts 27 stützt und diesem gemeinsam mit der Hubstange 24 einen parallel zur Vorschubrichtung vor- und zurückgehenden Pendelhub erteilt.

Die Hubstange 24 trägt an ihrem unteren Ende eine Spannhülse 32 zur Aufnahme und zum Spannen des Sägeblatts 27. Das Sägeblatt 27 hat einen V-förmig angeprägten Rükken 270, der sich mit seinen Schrägflächen 272 beidseitig abgestützt in der umlaufenden V-Nut der Leitrolle 29 zentriert.

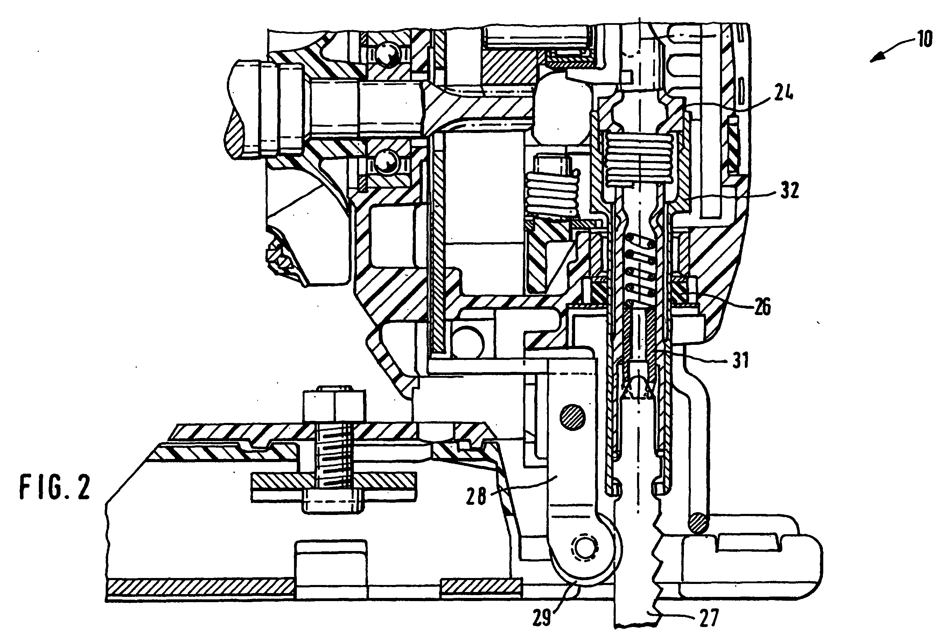

Figur 2 zeigt einen vergrößerten Ausschnitt gemäß Figur 1 im Bereich der Leitrolle 29, ohne dass die zuvor aufgeführten Einzelheiten hier nochmals wiederholt werden sollen.

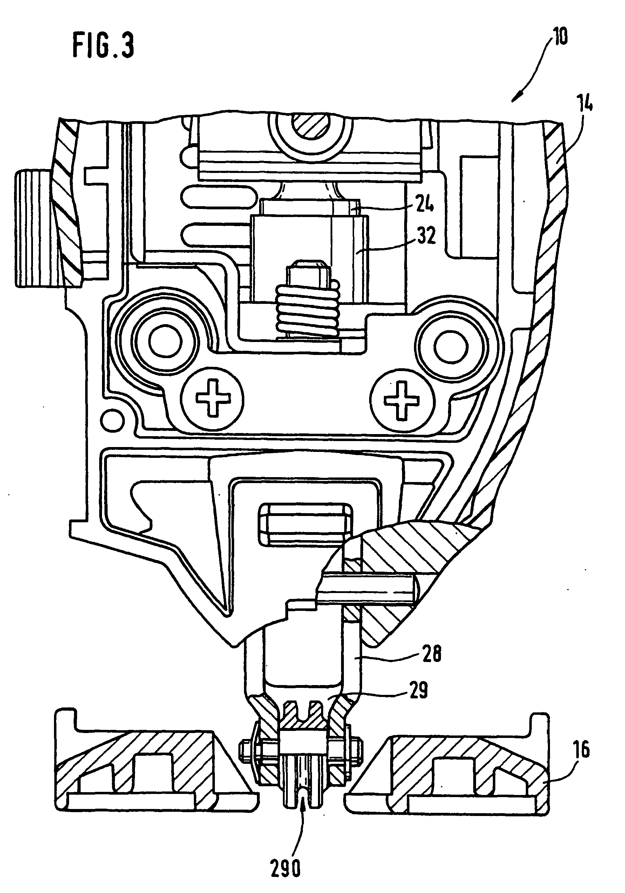

Figur 3 zeigt einen senkrechten Querschnitt der Stichsäge 10 gemäß Figur 1, wobei die Schnittebene durch den Pendelhebel 28 und die Leitrolle 29 führt. Dadurch wird die Ausgestaltung der Leitrolle 29 mit einer besonderen, konischen Umfangsnut 290 deutlich erkennbar. Auf die übrigen, schon zu Figur 1 und 2 erläuterten Bezugszeichen soll hier nicht nochmals eingegangen werden.

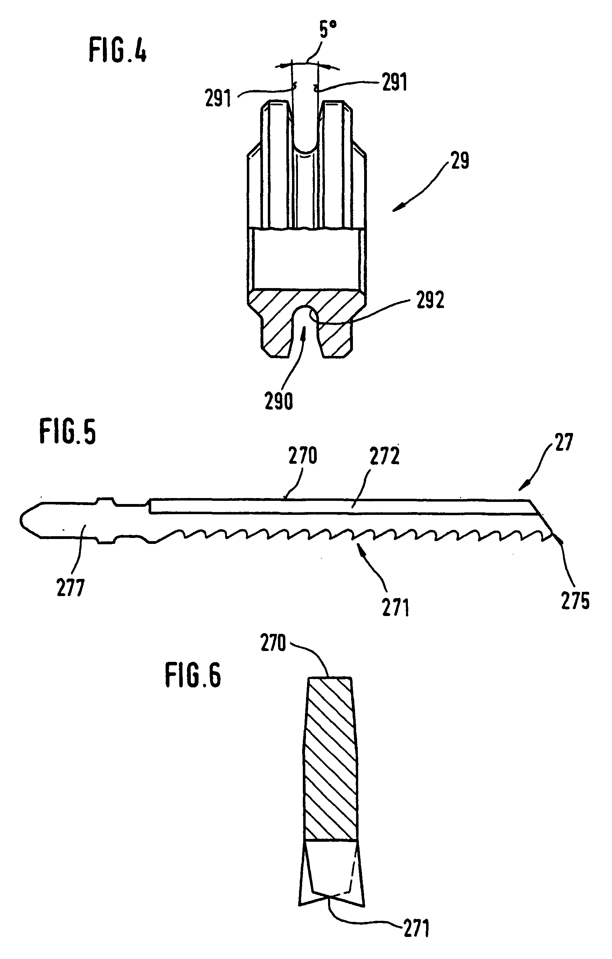

Figur 4 zeigt die Leitrolle 29 als Einzelheit in Teilschnittdarstellung, wobei die Umfangsnut 290 besonders deutlich erkennbar ist, insbesondere deren Flanken 291, die unter einem Gesarntwinkel von 5 Grad zueinander geneigt sind. Außerdem ist der Nutgrund 292 erkennbar, der geringfügig schmaler ist als die größte Breite B des Sägeblattrückens 270 des Stichsägeblatts 27.

Figur 5 zeigt eine Seitenansicht des Stichsägeblatts 27 mit dem Sägeblattrücken 270 und der diesem gegenüberliegenden Zahnseite 271. Der hintere Bereich des Sägeblattrückens 270 ist V-förmig geprägt, so dass zwei Schrägflächen 272 entstehen, die zum Sägeblattrücken 270 hin verjüngend verlaufen.

In Betrachtungsrichtung rechts hat das Sägeblatt 27 eine Sägeblattspitze 275 und in Betrachtungsrichtung links ein Einspannende 277, mit dem es in der Spannhülse 32 lösbar spannbar ist.

Figur 6 zeigt einen vergrößerten Querschnitt des Sägeblatts 27, wobei die unter einer Neigung von 7 Grad zu einander abgewinkelten Schrägflächen 272 deutlich erkennbar sind.

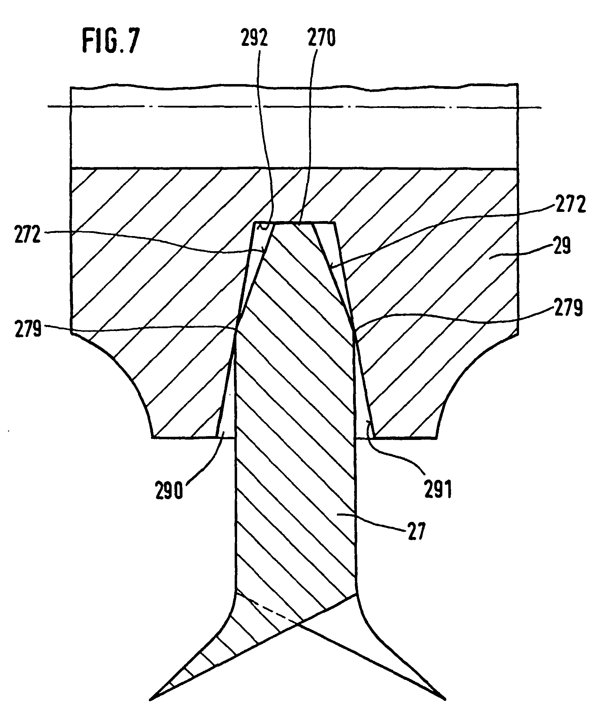

Figur 7 zeigt einen hälftigen Querschnitt der Leitrolle 29 mit ihrer Umfangsnut 290 und sich darin abstützendem Sägeblatt 27. Dieses besonders schmale Sägeblatt 27 stützt sich mit seinem Sägeblattrücken 270 ausnahmsweise am Nutgrund 292 ab. Gleichzeitig stützt es sich seitlich mit gegenüberliegenden Kanten 279 an den seitlichen Nutflanken 291 der Umfangsnut 290 der Leitrolle 29 ab. Die Kanten 279 werden am Sägeblatt 27 im Übergang von dessen Seitenfläche zur Schrägfläche 272 gebildet. Dadurch wird ein seitliches Ausweichen bzw. Torsionsbewegungen des Sägeblatts 27 beim Sägevorgang verhindert und ein besonders korrekter Schnittverlauf beim Sägen gesichert.

Bei breiteren/stärkeren Sägeblättern gelangt deren Sägeblattrücken 270 nicht zur Anlage an den Nutgrund 292 der Umfangsnut 290, sondern diese stützen sich nur mit ihren Kanten 279 an den Nutflanken 291der Umfangsnut 290 ab.

## Patentansprüche

1. Handstichsägemaschine (10) mit einem Gehäuse (12), das eine Hubstange (24) aufnimmt zur Auf- und Abbewegung eines daran befestigten, länglichen Sägeblatts (27) mit einer Zahnseite und einem Sägeblattrücken (270), sowie mit einer den Sägeblattrücken (270) abstützenden Leitrolle (29) mit einer zentralen Umfangsnut (290), in die das Sägeblatt mit seinem Sägeblattrücken (270) hineinragt und darin geftihrt ist, wobei die Flanken der Umfangsnut (290) konisch angeschrägt sind, **dadurch gekennzeichnet, daß** das Sägeblatt am Sägeblattrücken (270) auf beiden Seiten mit 7° angeschrägt ist, so daß es sich zum Sägeblattrücken (270) hin verjüngt und flächig in der Umfangsnut (290) abstützbar ist, deren Nutflanken (291) mit 5° angeschrägt sind.

2. Handstichsägemaschine nach Anspruch 1, **dadurch gekennzeichnet, daß** die Anschrägung des Sägeblattrückens (270) spanlos geformt, insbesondere geprägt ist.

3. Handstichsägemaschine nach Anspruch 1, **dadurch gekennzeichnet, daß** die Leitrolle (29) als Pendelhub-Stützrolle dient.

4. Handstichsägemaschine nach Anspruch 1, **dadurch gekennzeichnet, daß** der Sägeblattrücken (270) breiter als der Nutgrund (292) der Umfangsnut (290) der Leitrolle (29), insbesondere nicht breiter als 1,5 mm, ist.

5. Handstichsägemaschine nach Anspruch 1, **dadurch gekennzeichnet, daß** die Nutflanken (291) der zentralen Umfangsnut (290) mit 5° angeschrägt sind.

6. Handstichsägegemaschine nach Anspruch 1, **dadurch gekennzeichnet, daß** die Leitrolle (29) einen Durchmesser von 10 bis 25 mm hat und die Nut möglichst tief ist, insbesondere mindestens 5 mm.

7. Handstichsägemaschine nach Anspruch 1, **dadurch gekennzeichnet, daß** der Nutgrund (292) weniger breit als der Sägeblattrücken (270), insbesondere nicht breiter als 1,4 mm, ist.

## Claims

1. Hand-held jigsaw (10) having a housing (12) which accommodates a stroke rod (24) for the up-and-down movement of an elongated saw blade (27) which is fastened thereto and has a tooth side and a saw-blade back (270), and having a guide roller (29) which supports the saw-blade back (270) and has a central circumferential groove (290) into which the saw blade projects with its saw-blade back (270) and is guided therein, the flanks of the circumferential groove (290) being conically bevelled, **characterized in that** the saw blade is bevelled on the saw-blade back (270) at 7° on both sides, so that it tapers towards the saw-blade back (270) and can be supported over a surface area in the circumferential groove (290), the groove flanks (291) of which are bevelled at 5°.

2. Hand-held jigsaw according to Claim 1, **characterized in that** the bevelling of the saw-blade back (270) is formed by non-cutting shaping, in particular embossed.

3. Hand-held jigsaw according to Claim 1, **characterized in that** the guide roller (29) serves as a pendulum-stroke supporting roller.

4. Hand-held jigsaw according to Claim 1, **characterized in that** the saw-blade back (270) is wider than the groove root (292) of the circumferential groove (290) of the guide roller (29), in particular is not wider than 1.5 mm.

5. Hand-held jigsaw according to Claim 1, **characterized in that** the groove flanks (291) of the central circumferential groove (290) are bevelled at 5°.

6. Hand-held jigsaw according to Claim 1, **characterized in that** the guide roller (29) has a diameter of 10 to 25 mm and the groove is as deep as possible, in particular at least 5 mm.

7. Hand-held jigsaw according to Claim 1, **characterized in that** the groove root (292) is not as wide as the saw-blade back (270), in particular is not wider than 1.4 mm.

## Revendications

1. Scie sauteuse manuelle (10) comprenant un boîtier (12) qui reçoit une tige de course (24) pour faire monter et descendre une lame de scie (27) allongée fixée à celle-ci et présentant un côté denté et un dos de lame de scie (270), ainsi qu'un galet guide (29) soutenant le dos de lame de scie (270) et muni d'une rainure périphérique centrale (290) dans laquelle est guidée et pénètre la lame de scie par son dos de lame de scie (270), les flancs de la rainure périphérique (290) étant chanfreinés de manière conique,
**caractérisée en ce que**
la lame de scie, au niveau du dos de lame de scie (270), est chanfreinée des deux côtés de 7° de façon à se rétrécir en direction du dos de lame de scie (270) et à pouvoir s'appuyer de manière plane dans la rainure périphérique (290) dont les flancs de rainure (291) sont chanfreinés de 5°.

2. Scie sauteuse manuelle selon la revendication 1,
**caractérisée en ce que**
le chanfrein du dos de lame de scie (270) est formé sans enlèvement de copeaux, notamment estampé.

3. Scie sauteuse manuelle selon la revendication 1,
**caractérisée en ce que**
le galet guide (29) sert de galet de soutien de la course pendulaire.

4. Scie sauteuse manuelle selon la revendication 1,
**caractérisée en ce que**
le dos de lame de scie (270) est plus large que le fond de rainure (292) de la rainure périphérique (290) de galet guide (29), en particulier d'une largeur inférieure à 1,5 mm.

5. Scie sauteuse manuelle selon la revendication 1,
**caractérisée en ce que**
les flancs de rainure (291) de la rainure périphérique centrale (290) sont chanfreinés de 5°.

6. Scie sauteuse manuelle selon la revendication 1,
**caractérisée en ce que**
le galet guide (29) présente un diamètre de 10 à 25 mm et la rainure présente une profondeur la plus grande possible, en particulier au moins de 5 mm.

7. Scie sauteuse manuelle selon la revendication 1,
**caractérisée en ce que**
le fond de rainure (292) est moins large que le dos de lame de scie (270), en particulier d'une largeur inférieure à 1,4 mm.
